# EUROPEAN PATENT APPLICATION

(11) **EP 2 400 514 A1**
(43) Date of publication of application: **28.12.2011**
(21) Application number: 10785942.3
(22) Date of filing: 08.06.2010
(51) Int. Cl.: H01G 4/18, H01G 4/30

(54) **CAPACITOR AND METHOD FOR MANUFACTURING CAPACITOR**

(30) Priority: 11.06.2009 JP 2009139739
(71) Applicant: Panasonic Corporation, Kadoma-shi Osaka 571-8501 (JP)
(72) Inventor: KAGATA, Hiroshi, Osaka-shi, Osaka 540-6207 (JP); HOGIRI, Masayuki, Osaka-shi, Osaka 540-6207 (JP)
(74) Representative: Kügele, Bernhard
(86) International application number: PCT/JP2010/003792
(87) International publication number: WO 2010/143410

(57) **Abstract**

A capacitor includes a substrate made of an organic film, a first conductive layer provided on an upper surface of the substrate, a first dielectric layer provided on an upper surface of the first conductive layer, a second dielectric layer provided on an upper surface of the first dielectric layer, and a second conductive layer provided on an upper surface of the second dielectric layer. The first dielectric layer is made of plural metal oxide chips spread over on the upper surface of the first conductive layer. The second dielectric layer is made of plural metal oxide chips spread over on a lower surface of the second conductive layer. This capacitor can have a large capacitance.

## Description

### TECHNICAL FIELD

The present invention relates to a capacitor that can be thin and have a large capacitance.

### BACKGROUND ART

Fig. 13 is a cross-sectional view of conventional capacitor 900 in PTL 1. Capacitor 900 is a film capacitor, and includes dielectric layer 901 made of flexible resin film, conductive layer 902 made of conductor, such as aluminum, deposited on the upper surface of dielectric layer 901, dielectric layer 903 made of flexible resin film provided on the upper surface of conductive layer 902, and conductive layer 904 made of conductor such as aluminum deposited on the upper surface of dielectric layer 903.

One end of conductive layer 902 is electrically connected to terminal 905, and the other end of conductive layer 902 is open. Contrarily, one end of conductive layer 904 is open, and its other end is electrically connected to terminal 906.

Terminal 905 is formed on one end of conventional capacitor 900, and terminal 906 is formed on the other end that is opposite to terminal 905. Direct current continuity is not established between terminals 905 and 906.

Uppermost dielectric layer 907 is provided on the uppermost surface of capacitor 900 to prevent exposure of conductive layer 904. However, capacitor 900 is prevented from having a large capacitance.

### CITATION LIST

### PATENT LITERATURE

PTL 1: Japanese Patent Laid-Open Publication No.2000-124061

### SUMMARY OF THE INVENTION

A capacitor includes a substrate made of an organic film, a first conductive layer provided on an upper surface of the substrate, a first dielectric layer provided on an upper surface of the first conductive layer, a second dielectric layer provided on an upper surface of the first dielectric layer, and a second conductive layer provided on an upper surface of the second dielectric layer. The first dielectric layer is made of plural metal oxide chips spread over on the upper surface of the first conductive layer. The second dielectric layer is made of plural metal oxide chips spread over on a lower surface of the second conductive layer.

This capacitor can have a large capacitance.

### BRIEF DESCRIPTION OF DRAWINGS

Fig. 1A is a cross-sectional view of a capacitor in accordance with Exemplary Embodiment 1 of the present invention.
Fig. 1B is an enlarged schematic view of a dielectric layer of the capacitor in accordance with Embodiment 1.
Fig. 2 is a cross-sectional view of a capacitor in accordance with Exemplary Embodiment 2 of the invention.
Fig. 3 is a cross-sectional view of a capacitor in accordance with Exemplary Embodiment 3 of the invention.
Fig. 4 is a cross-sectional view of a capacitor in accordance with Exemplary Embodiment 4 of the invention.
Fig. 5 is a cross-sectional view of a capacitor in accordance with Exemplary Embodiment 5 of the invention.
Fig. 6 is a cross-sectional view of a capacitor in accordance with Exemplary Embodiment 6 of the invention.
Fig. 7 is a cross-sectional view of a capacitor in accordance with Exemplary Embodiment 7 of the invention.
Fig. 8 is a cross-sectional view of a capacitor in accordance with Exemplary Embodiment 8 of the invention.
Fig. 9 is an enlarged cross-sectional view of a capacitor in accordance with Exemplary Embodiment 9 of the invention.
Fig. 10A is an enlarged cross-sectional view of another capacitor in accordance with Embodiment 9.
Fig. 10B is an enlarged cross-sectional view of a still another capacitor in accordance with Embodiment 9.
Fig. 10C is an enlarged cross-sectional view of a further capacitor in accordance with Embodiment 9.
Fig. 11 is an enlarged cross-sectional view of a capacitor in accordance with Exemplary Embodiment 10 of the invention.
Fig. 12 is an enlarged cross-sectional view of another capacitor in accordance with Embodiment 10.
Fig. 13 is a cross-sectional view of a conventional film capacitor.

### DETAIL DESCRIPTION OF PREFERRED EMBODIMENTS EXEMPLARY EMBODIMENT 1

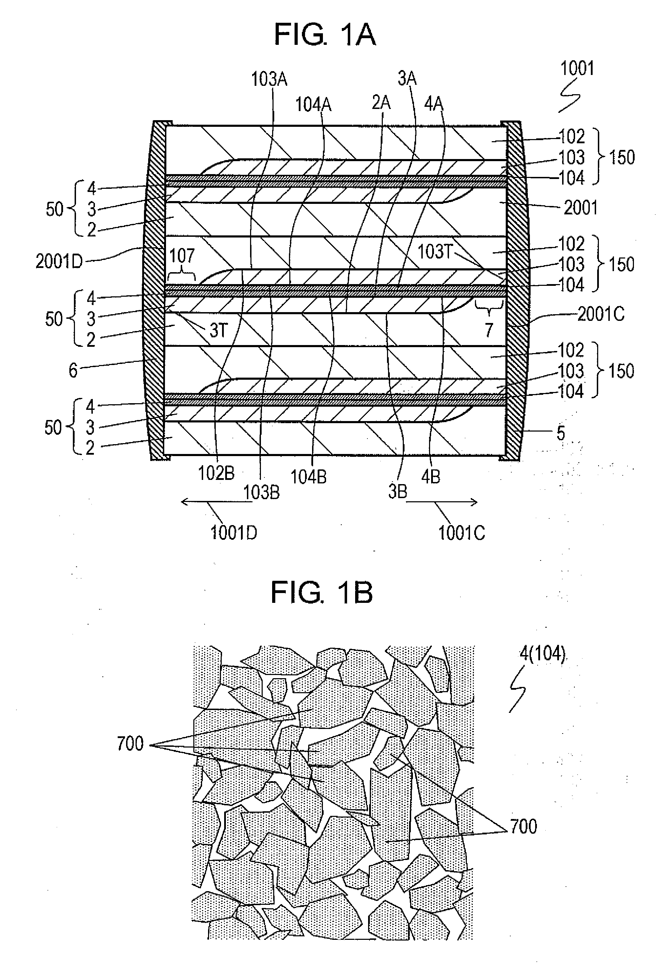

Fig. 1A is a cross-sectional view of capacitor 1001 according to Exemplary Embodiment 1 of the present invention. Capacitor 1001 includes capacitor element 2001 and terminals 5 and 6. Capacitor element 2001 has side surface 2001C opening in direction 1001C and side surface 2001D opposite to side surface 2001. Side surface 2001D opens in direction 1001D opposite to direction 1001C. Terminals 5 and 6 are provided on side surfaces 2001C and 2001D of capacitor element 2001, respectively. Upper surface 2A of substrate 2 has non-conductive-layer portion 7 at an end of upper surface 2Ain direction 1001C. Conductive layer 3 is formed on upper surface 2A of substrate 2 except non-conductive-layer portion 7. Dielectric layer 4 is formed on upper surface 3A of conductive layer 3. Dielectric layer 104 is provided on upper surface 4A of dielectric layer 4. Lower surface 102B of substrate 102 has non-conductive-layer portion 107 at an end of lower surface 102B in direction 1001D. Conductive layer 103 is formed on lower surface 102 of substrate 102 except non-conductive-layer portion 107. Dielectric layer 104 is formed on lower surface 103B of conductive layer 103. Lower surface 104B of dielectric layer 104 is positioned on upper surface 4A of dielectric layer 4. Conductive layer 103 faces conductive layer 3 across dielectric layers 4 and 104. Conductive layers 103 and 3 are connected to terminals 5 and 6, respectively. Thicknesses of dielectric layers 4 and 104 ranges from 0.3 nm to 50.0 nm, and their relative dielectric constant is not lower than 30. Substrates 2 and 102 are made of insulating material, such as organic film.

Fig. 1B is an enlarged schematic view of dielectric layer 4 (104). Dielectric layer 4 (104) is a nanosheet made of plural metal oxide chips 700 spread over on upper surface 3A and lower surface 103B of conductive layers 3 and 103. Metal oxide chips 700 are made of oxide nanosheet such as titanium oxide nanosheet and niobium oxide nanosheet. Metal oxide chip 700 has a thickness of several atoms which ranges roughly from 0.3 nm to 2 nm, and preferably not less than 0.3 nm and not greater than 50 nm. A length and a width of the metal oxide chip range from about 10 nm to 1 mm. Metal oxide chips 700 are spread over and bonded to the upper surface and a lower surface of the conductive layer with an adhesion support layer made of cathion disposed on the upper surface and the lower surface of the conductive layer.

A method of manufacturing capacitor 1001 according to Embodiment 1 will be described below.

### <Process 1>

Conductive layer 3 is disposed on upper surface 2A of substrate 2 except non-conductive-layer portion 7 of upper surface 2A of substrate 2. Conductive layer 3 is made of metal, such as aluminum, and formed on upper surface 2A of substrate 2 by a thin-film formation technology, such as deposition or sputtering. The thickness of conductive layer 3 is typically about 20 nm. For example, a thickness of substrate 2 is several micrometers, and its relative dielectric constant is not higher than 10.

### <Process 2>

After Process 1, dielectric layer 4 with a thickness ranging from 0.3 nm to 50 nm and a relative dielectric constant not lower than 30 is disposed on upper surface 3A of conductive layer 3. Dielectric layer 4 is made of a titanium oxide nanosheet with a relative dielectric constant of about 125 or a niobium oxide nanosheet with a relative dielectric constant of about 300. Thus, substrate 2, dielectric layer 4, and conductive layer 3 constitute unit 50 which is a metallized film. Substrate 2, dielectric layer 4, and conductive layer 3 of unit 50 are identical to substrate 102, dielectric layer 104, and conductive layer 103, respectively, and constitute unit 150. In other words, unit 50 functions as unit 150 by turning up side down.

Dielectric layer 4 (104) may be formed on a side surface of conductive layer 3 (103) facing non-conductive-layer portion 7 (108) and on non-conductive-layer portion 7 (107) of surface 2A(102B) of substrate 2 (102). This structure can achieve a configuration preventing conductive layers 3 and 103 from short-circuiting in later processes. In addition, this can also avoid short-circuiting between conductive layers 3 and 103 and terminal 5 or terminal 6 in later processes.

### < Process 3>

Units 50 and 150 obtained in Process 2 are overlaid and stacked. Lower surface 104B of dielectric layer 104 is disposed on upper surface 4A of dielectric layer 4. Dielectric layers 3 and 103 face each other across dielectric layers 4 and 104. In addition, non-conductive-layer portions 7 and 107 are provided in directions 1001C and 1001D opposite to each other, respectively.

In capacitor 1001 shown in Fig. 1A, three pairs of units 50 and 150 are stacked. However, the number of the pairs is determined with consideration according to a required capacitance and a required size of capacitor 1001.

After Process 3, terminals 5 and 6 are thermally sprayed on side surfaces 200aC and 2001D of capacitor element 2001, respectively. Conductive layers 3 and 103 are connected to terminals 6 and 5 in direct current, respectively.

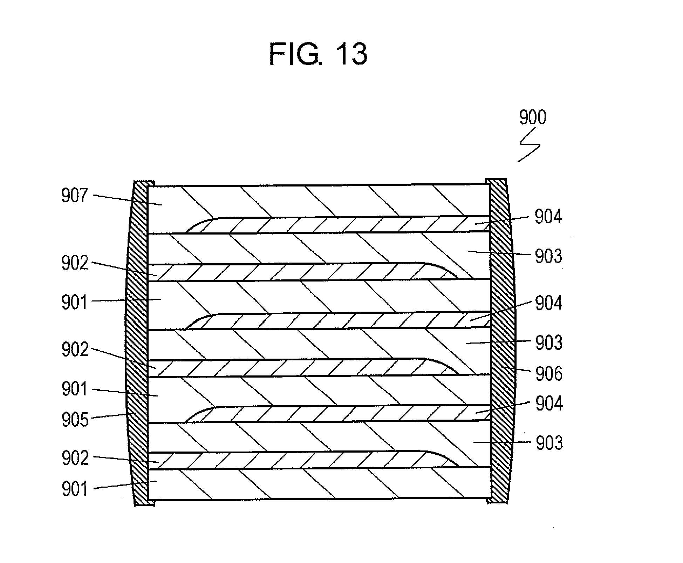

In conventional film capacitor 900 shown in Fig. 13, thicknesses of dielectric layer 901 and dielectric layer 903 are about several micrometers. Relative dielectric constants of these dielectric layers are roughly not higher than 10, hence hardly providing the capacitor with a large capacitance.

In capacitor 1001, conductive layers 3 and 103 face each other in a narrow distance across two nanosheets (dielectric layers 4 and 104) each having a thickness ranging from 0.3 nm to 50 nm and a high relative dielectric constant and which are difficult to handle solely in view of its strength, hence providing the capacitor with a large capacitance.

Capacitor 1001 shown in Fig. 1A is formed by stacking units 50 and 150. However, the present invention is not limited to this configuration. Units 50 and 150 may be overlaid by rolling. I this case, terminal 6 may be thermally sprayed on one end of rolled unit 50, and terminal 5 may be welded on the other end of rolled unit 150.

Capacitor 1001 according to Embodiment 1 shown in Fig. 1A can be obtained by stacking units 50 and 150 with the same structure in predetermined directions, thereby increasing production efficiency.

Substrate 2 is made of an organic film, such as a resin film, and has a thickness larger than that of dielectric layer 4. Accordingly, conductive layer 3 (103) and dielectric layer 4 (104) can be formed on the upper surface of substrate 2 (102) as a base material.

Substrates 2 and 102 are made of organic compound, and dielectric layers 4 and 104 shown in Fig. 1A are made of inorganic compound.

In the above description, units 50 and 150 obtained after Process 2 are stacked such that conductive layers 3 and 103 face each other across two dielectric layers 4 and 104. Alternatively, the unit obtained after Process 1 that includes dielectric layer 104 and conductive layer 103 may be stacked on unit 50. In this case, conductive layers 3 and 103 face each other across only dielectric layer 4, hence providing a large capacitance.

The cross-sectional view of capacitor 1001 shown in Fig. 1A illustrates the layers vertically pressed after the above processes to bond each layer. In Fig. 1A, upper surface 4A (lower surface 104B) of dielectric layer 4 (104) is smooth. However, the surfaces of the embodiment may not be limited to the smooth surfaces, but may be rough surfaces.

As described above, capacitor 1001 includes structures 50 and 150. Structure 50 includes substrate 2 made of an organic film, conductive layer 3 formed on upper surface 2A of substrate 2, and dielectric layer 4 formed on upper surface 3A of conductive layer 3. Conductive layer 3 has connecting portion 3T at least reaching one end of substrate 2. Structure 150 includes substrate 102 made of an organic film, conductive layer 103 formed on lower surface 102B of substrate 102, and dielectric layer 104 formed on lower surface 103B of conductive layer 103. Conductive layer 103 has connecting portion 3T at least reaching one end of substr5ate 102. Dielectric layers 4 and 104 are made of a metal oxide with a thickness of about several atoms, or a laminated body of this metal oxide. Connecting portions 3T and 103T are positioned in opposite directions to each other. Structures 50 and 150 are stacked or rolled such that dielectric layer 4 contacts dielectric layer 104.

As described above, substrates 2 and 102 made of an organic film are prepared. Conductive layer 3 is formed on at least one surface of substrate 2. Conductive layer 103 is formed on at least one surface of substrate 102. Conductive layer 3 has connecting portion 3T reaching one end of substrate 2. Conductive layer 103 has connecting portion 103T reaching one end of substrate 2. Dielectric layers 4 and 104 are formed on surfaces of conductive layers 3 and 103, respectively. In this way, units 50 and 150 are manufactured. Then, capacitor 1001 is manufactured by stacking or rolling units 50 and 150 such that dielectric layer 4 contacts dielectric layer 104.

### EXEMPLARY EMBODIMENT 2

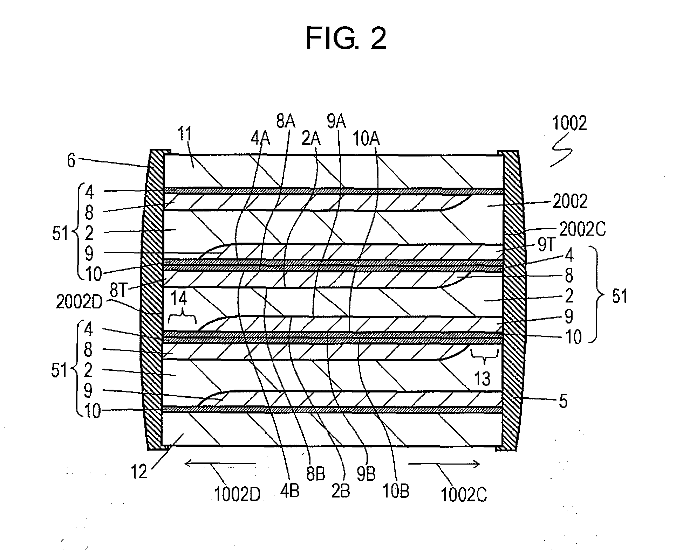

Fig. 2 is a sectional view of capacitor 1002 according to Exemplary Embodiment 2. Capacitor 1002 includes capacitor element 2002 and terminals 5 and 6. Capacitor element 2002 has side surface 2002C opening in direction 1002C and side surface 2002D opposite to side surface 2002C. Side surface 2002D opens in direction 1002D opposite to direction 1002C. Terminals 5 and 6 are provided on side surfaces 2002C and 2002D of capacitor element 2002, respectively. Upper surface 2A of substrate 2 has non-conductive-layer portion at an end of upper surface 2A in direction 1002. Conductive layer 8 is formed on upper surface 2A of substrate 2 except non-conductive-layer portion 13. Dielectric layer 4 is formed on upper surface 8A of conductive layer 8. Lower surface 2B of substrate 2 has non-conductive-layer portion 14 at an end of lower surface 2B in direction 1002D. Conductive layer 9 is formed on lower surface 2B of substrate 2 except non-conductive-layer portion 14. Dielectric layer 10 is provided on lower surface 9B of conductive layer 9. Lower surface 10B of dielectric layer 10 is situated on upper surface 4A of dielectric layer 4. Conductive layer 8 faces conductive layer 9 across dielectric layers 4 and 10. Thicknesses of dielectric layers 4 and 10 range from 0.3 to 50.0 nm, and their relative dielectric constant is not lower than 30. Dielectric layer 10 is made of an oxide nanosheet with a structure identical to that of dielectric layer 4.

A method of manufacturing capacitor 1002 according to Embodiment 2 will be described below.

### <Process 1>

Conductive layer 8 is disposed on upper surface 2A of substrate 2 except non-conductive-layer portion 13. Conductive layer 8 is formed on upper surface 2A of substrate 2 by a thin-film formation technology, such as deposition or sputtering. Conductive layer 8 is made of metal, such as aluminum. A thickness of conductive layer 8 is typically about 20 nm. For example, a thickness of substrate 2 is several micrometers, and its relative dielectric constant is not higher than 10.

Conductive layer 8 is formed except non-conductive-layer potion 13 so as to prevent conductive layer 8 from being connected to terminal 5 in direct current during a later process for forming terminal 5 at one end of capacitor 1.

### <Process 2>

After Process 1, dielectric layer 4 with a thickness ranging from 0.3 nm to 50 nm and a relative dielectric constant not lower than 30 is disposed on upper surface 8A of conductive layer 8.

Dielectric layer 4 is made of a titanium oxide nanosheet with a relative dielectric constant of about 125 or a niobium oxide nanosheet with a relative dielectric constant of about 300.

Dielectric layer 4 may be formed on a side surface of conductive layer 8 facing non-conductive-layer portion 13 or on non-conductive-layer portion 13 of upper surface 2A of substrate 2. This structure prevents conductive layer 8 and conductive layer 9 that faces each other from short-circuiting in later processes.

In addition, this structure prevents conductive layer 8 and terminal 5 from short-circuiting during a later process for forming terminal 5 on side surface 2002C of capacitor element 2002.

### <Process 3>

After Process 2, conductive layer 9 is disposed on lower surface 2B of substrate 2 except non-conductive-layer portion 14 positioned at an end of lower surface 2B in direction 1002D. Conductive layer 9 is formed on lower surface 2B of substrate 2 by a thing-film formation technology, such as deposition or sputtering. Conductive layer 9 is made of metal, such as aluminum, and a thickness of conductive layer 9 is typically about 20 nm.

Conductive layer 9 is formed except non-conductive-layer portion 14 so as to prevent conductive layer 9 from being connected to terminal 6 in direct current during a later process for forming terminal 6 on side surface 2002D of capacitor element 2002.

### <Process 4>

After Process 3, dielectric layer 10 with a thickness ranging from 0.3 nm to 50 nm and a relative dielectric constant not lower than 30 is provided on the lower surface of conductive layer 9, thereby providing unit 51 which is a metal film.

Dielectric layer 10 is made of a titanium oxide nanosheet with a relative dielectric constant of about 125 or a niobium oxide nanosheet with a relative dielectric constant of about 300.

Dielectric layer 10 may be formed on a side surface of conductive layer 9 facing non-conductive-layer portion 14 or a non-conductive-layer portion 14 of the lower surface of substrate 2. This structure prevents conductive layer 8 and conductive layer 9 that face each other from short-circuiting in later processes.

In addition, this structure can prevent conductive layer 9 and terminal 6 from short-circuiting in a process for forming terminal 6 on side surface 2002D of capacitor element 2002.

### <Process 5>

Lower surface 10B of dielectric layer 10 of unit 51 is placed on upper surface 10A of dielectric layer 10 of another unit 51 to overlay and stack units 51 such that conductive layer 8 and conductive layer 9 face each other across dielectric layers 4 and 10.

Capacitor 1002 shown in Fig. 2 includes three units 51. The number of units 51 is determined with consideration typically to a required capacitance and a required size of capacitor 1002.

After Process 5, insulation coating layer 11 is provided on the uppermost layer, and insulation coating layer 12 is provided on the lowermost layer. This structure protects conductive layers 8 and 9 and dielectric layers 4 and 10 from external environment.

Then, terminal 5 is thermally sprayed on side surface 2002C of capacitor element 2002, and terminal 6 is thermally sprayed on side surface 2002D of capacitor element 2002. Plural conductive layers 8 provided inside capacitor element 2002 are connected to terminal 6 on side surface 2002D in direct current. Plural conductive layers 9 are connected to terminal 5 on side surface 2002C in direct current.

In capacitor 1002, conductive layers 8 and 9 face each other across dielectric layers 4 and 10 made of the nanosheets with a thickness ranging from 0.3 nm to 50 nm and a high relative dielectric constant, hence providing the capacitor with a large capacitance.

In capacitor 1002 shown in Fig. 2, three units 51 are stacked. However, this embodiment is not limited to this configuration. Single unit 51 may be overlaid by rolling. Terminal 5 may be thermally sprayed on one end of rolled unit 51. Terminal 6 may be thermally sprayed on the other end of the rolled unit.

Capacitor 1002 according to Embodiment 2 shown in Fig. 2 can be obtained just by stacking units 51 with the same shape, accordingly, increasing productivity.

Substrate 2 is made of organic film, such as resin film, and its thickness is larger than the thicknesses of dielectric layer 4 and dielectric layer 10. This can form conductive layer 3 and dielectric layer 4 on upper surface 2A of substrate 2.

Substrate 2 shown in Fig. 2 is made of organic compound. Dielectric layer 4 shown in Fig. 2 and dielectric layer 10 shown in Fig. 2 are made of inorganic compound.

The cross-sectional view of capacitor 1002 shown in Fig. 2 illustrates capacitor 1002 pressed in a vertical direction shown in Fig. 2 after the above processes to bond each layer. In Fig. 2, dielectric layer 4 and dielectric layer 10 have smooth surfaces. However, dielectric layer 4 and dielectric layer may rough surfaces.

As described above, capacitor 1002 includes plural units 51 and a pair of external electrodes 5 and 6. Each unit 51 includes substrate 2 made of an organic film, a pair of conductive layers 8 and 9 formed on both surfaces 2A and 2B of substrate, respectively, and dielectric layer 4 (10) formed on a surface of at least one of conductive layers 8 and 9. Conductive layer 8 has connecting portion 8T reaching at least one end of substrate 2. Conductive layer 9 has connecting portion 9T reaching one end of substrate 2. External electrodes 5 and 6 are electrically connected to conductive layers 9 and 4, respectively. Dielectric layer 4 (10) is made of a metal oxide with a thickness of several atoms, or a laminated body of this metal oxide. Connecting portions 8T and 9T are positioned in opposite directions to each other. Plural units 51 are overlaid in the same direction, and then, are rolled or stacked.

As described above, substrate 2 made of an organic film is prepared. A pair of conductive layers 8 and 9 are formed on both surfaces of substrate 2, respectively. Conductive layer 8 has connecting portion 8T reaching one end of substrate 2. Conductive layer 9 has connecting portion 9T reaching one end of substrate 2. Connecting portions 8T and 9T are disposed in opposite directions to each other. Dielectric layer 4 (10) is formed on at least one of a pair of conductive layers 8 and 9. In this way, plural units 61 are manufactured. Then, plural units 61 are overlaid in the same direction, and then, are stacked or rolled to manufacture capacitor 1002.

### EXEMPLARY EMBODIMENT 3

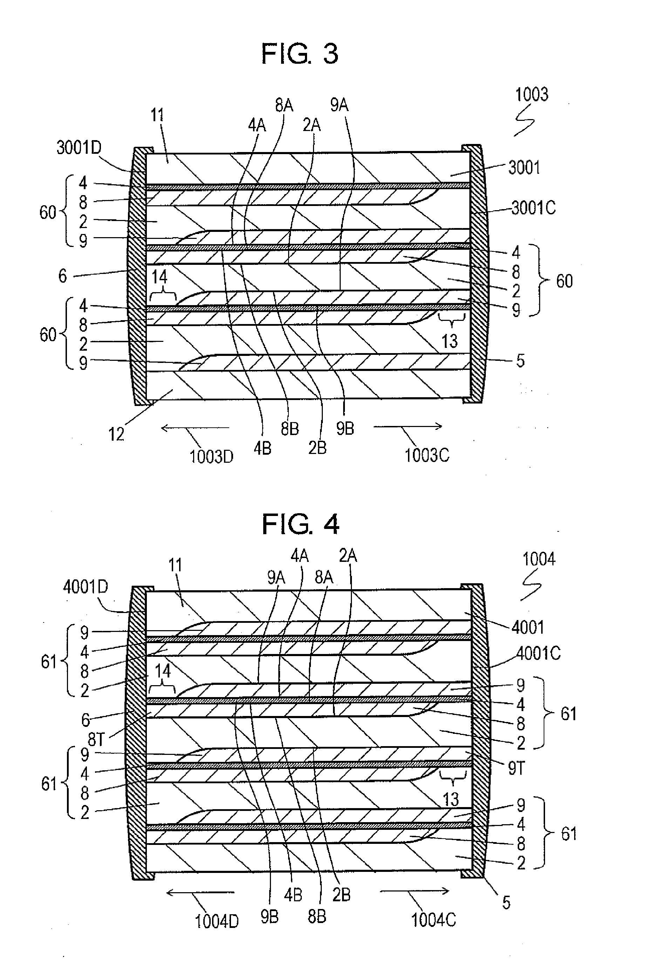

Fig. 3 is a cross-sectional view of capacitor 1003 according to Exemplary Embodiment 3. Capacitor 1003 includes capacitor element 3001 and terminals 5 and 6. Capacitor element 3001 has side surface 3001C opining in direction 1003C and side surface 3001D opposite to side surface 3001C. Side surface 3001D opens in direction 1003D opposite to direction 1003C. Terminals 5 and 6 are provided on side surfaces 3001C and 3001D of capacitor element 3001, respectively. Upper surface 2A of substrate 2 has non-conductive-layer portion 13 positioned at an end of upper surface 2A of substrate 2 in direction 1003C. Conductive layer 8 is formed on upper surface 2A of substrate 2 except for an area of non-conductive-layer portion 13. Dielectric layer 4 is formed on upper surface 8A of conductive layer 8. Lower surface 2B of substrate 2 has non-conductive-layer portion 14 at an end in direction 10003D. Conductive layer 9 is formed on lower surface 2B of substrate 2 except non-conductive-layer portion 14. Substrate 2, dielectric layer 4, and conductive layers 8 and 9 constitute unit 60. Plural units 60 are stacked such that lower surface 9A of conductive layer 9 is placed on upper surface 4A of dielectric layer and conductive layers 8 and 9 face each other across dielectric layer 4. Terminals 5 and 6 are connected to conductive layers 9 and 8, respectively. A thickness of dielectric layer 4 ranges from 0.3 to 50.0 nm, and its relative dielectric constant is not lower than 30.

A method of manufacturing capacitor 1003 according to Embodiment 3 will be described below.

### <Process 1>

Conductive layer 8 is disposed on a portion of upper surface 2A of substrate 2 except non-conductive-layer portion 13.

Conductive layer 8 is formed on upper surface 2A of substrate 2 by a thin-film formation technology, such as deposition or sputtering. Conductive layer 8 is made of metal, such as aluminum, and a thickness of conductive layer 8 is, for example, about 20 nm. For example, a thickness of substrate 2 is several micrometers and its relative dielectric constant is not higher than 10.

Conductive layer 8 is formed except non-conductive-layer portion 13 so as to prevent conductive layer 8 from being connected to terminal 5 in direct current in a later process for forming terminal 5.

### <Process 2>

After Process 1, dielectric layer 4 with a thickness ranging from 0.3 nm to 50 nm and a relative dielectric constant not lower than 30 is disposed on upper surface 8A of conductive layer 8.

Dielectric layer 4 is made of a titanium oxide nanosheet with a relative dielectric constant of about 125 or a niobium oxide nanosheet with a relative dielectric constant of about 300.

Dielectric layer 4 may be formed on a side surface of conductive layer 8 facing non-conductive-layer portion 13 or on non-conductive-layer portion 13 of the upper surface of substrate 2. This structure reduces short-circuiting between conductive layer 8 and conductive layer 9 that face each other in later processes.

This can also avoid short-circuiting between conductive layer 8 and terminal 5.

### <Process 3>

After Process 2, unit 60 is manufactured by disposing conductive layer 9 on lower surface 2B of substrate 2 except non-conductive-layer portion 14.

Conductive layer 9 is formed on the lower surface of substrate 2 by a thin-film formation technology, such as deposition or sputtering. As a material, aluminum is typically used, and a thickness of conductive layer 9 is, for example, about 20 nm.

Conductive layer 9 is formed except non-conductive-layer portion 14 so as to prevent conductive layer 9 from being connected to and terminal 6 in direct current in a later process for forming terminal 6.

### <Process 4>

Plural units 60 obtained in Process 3 are overlaid and stacked such that conductive layers 8 and 9 face each other across dielectric layer 4.

In capacitor 1003 shown in Fig. 3, three units 60 are stacked. However, the number of units is determined with consideration typically to a required capacitance and a required size of capacitor 1003.

After Process 4, insulation coating layer 11 is provided on the uppermost layer, and insulation coating layer 12 is provided on the lowermost layer. This structure protects conductive layer 8, conductive layer 9, and dielectric layer 4 from external environment.

Then, terminal 5 is thermally sprayed on side surface 3001C of capacitor element 3001. Similarly, terminal 6 is thermally sprayed on side surface 3001D of capacitor element 3001. Plural conductive layers 8 disposed inside capacitor element 3001 are connected to terminal 6 at side surface 3001D in direct current. Plural conductive layers 9 are connected to terminal 5 at side surface 3001D in direct current.

Conductive layer 8 and conductive layer 9 face each other across dielectric layer 4 that is a single nanosheet with a thickness ranging from 0.3 nm to 50 nm and a high relative dielectric constant, hence providing capacitor 1003 with a large capacitance

Capacitor 1003 shown in Fig. 3 is formed by stacking three units 60. However, the exemplary embodiment is not limited to this configuration. By rolling single unit 60, unit 60 to be overlaid. Terminal 5 may be thermally sprayed on one end of rolled unit 60, and terminal 6 may be thermally sprayed on the other end of rolled unit 60.

Capacitor 1003 shown in Fig. 3 can be obtained just by stacking units 60 with the same shape, thereby increasing productivity.

Substrate 2 is made of an organic film, such as resin film, and its thickness is larger than that of dielectric layer 4. This allows conductive layers 8 and 9 and dielectric layer 4 to be formed on upper surface 2A and lower surface 2B of substrate 2.

Substrate 2 shown in Fig. 3 is made of organic compound, and dielectric layer 4 shown in Fig. 3 is made of by inorganic compound.

A cross-sectional view of capacitor 1003 shown in Fig. 3 illustrates capacitor 1003 pressed in a vertical direction shown in Fig. 3 after the above processes so as to bond each layer. In Fig. 3, dielectric layer 4 has a smooth surface. However, the exemplary embodiment is not limited to the smooth surface. Dielectric layer 4 may have a rough surface.

### EXEMPLARY EMBODIMENT 4

Fig. 4 is a cross-sectional view of capacitor 1004 according to Exemplary Embodiment 4. Capacitor 1004 includes capacitor element 4001 and terminals 5 and 6. Capacitor element 4001 has side surface 4001C opening in direction 1004, and side surface 4001D opposite to side surface 4001C. Side surface 4001D opens in direction 1004D opposite to direction 1004C. Terminals 5 and 6 are provided on side surface 4001C and 4001D of capacitor element 4001, respectively. Upper surface 2A of substrate 2 has non-conductive-layer portion 13 at an end of upper surface 2A in direction 4001C. Conductive layer 8 is formed on upper surface 2A of substrate 2 except non-conductive-layer portion 13. Dielectric layer 4 is formed on upper surface 8A of conductive layer 8. Upper surface 4A of dielectric layer 4 has non-conductive-layer portion 14 at an end of upper surface 4A in direction 1004D. Unit 61 is formed by forming conductive layer 9 on upper surface 4A of dielectric layer 4 except non-conductive-layer portion 14. Plural units 61 are stacked such that lower surface 2B of substrate 2 is placed on upper surface 9A of conductive layer 9. Dielectric layer 4 has a thickness ranging from 0.3 to 50.0 nm and a relative dielectric constant not lower than 30.

A method of manufacturing capacitor 1004 according to Embodiment will be described below.

### <Process 1>

Conductive layer 8 is disposed on upper surface 2A of substrate 2 except non-conductive-layer portion 13. Conductive layer 8 is formed on upper surface 2A of substrate 2 by a thin-film formation technology, such as deposition or sputtering. Conductive layer 8 is made of metal, such as aluminum, and a thickness of conductive layer 8 is, for example, about 20 nm. For example, a thickness of substrate 2 is several micrometers, and its relative dielectric constant is not higher than 10.

Conductive layer 8 is formed except non-conductive-layer portion 13 so as to prevent conductive layer 8 from being connected to terminal 5 in direct current in a alter process for forming terminal 5 at side surface 4001C of capacitor 4001.

### <Process 2>

After Process 1, dielectric layer 4 with a thickness of ranging from 0.3 nm to 50 nm and a relative dielectric constant not lower than 30 is disposed on upper surface 8A of conductive layer 8.

Dielectric layer 4 is made of a titanium oxide nanosheet with a relative dielectric constant of about 125 or a niobium oxide nanosheet with a relative dielectric constant of about 300.

Dielectric layer 4 may be formed on a side surface of conductive layer 8 facing non-conductive-layer portion 13 or on non-conductive-layer portion 13 on the upper surface of substrate 2. This structure reduces short-circuiting between conductive layer 8 and conductive layer 9 that face each other in later processes.

### <Process 3>

After Process 2, unit 61 is manufactured by providing conductive layer 9 on upper surface 4A of dielectric layer 4 except non-conductive-layer portion 14. Conductive layer 9 is formed on upper surface 4A of dielectric layer 4 by a thin-film formation technology, such as deposition or sputtering. Conductive layer 9 is made of metal, such as aluminum, and a thickness of conductive layer 9 is, for example, 20 nm. To minimize damage to dielectric layer 4, conductive layer 9 may be formed by a deposition process at a room temperature.

Conductive layer 9 is formed except non-conductive-layer portion 14 so as to prevent conductive layer 9 from being connected to terminal 6 in direct current in a later process for forming terminal 6 at side surface 4001D of capacitor element 4001.

Non-conductive-layer portion 14 may be larger than non-conductive-layer portion 13. The insulation layer for securing insulation against terminal 6 is not disposed at an end of conductive layer 9 in direction 1004D. In order to reduce a risk of short-circuiting between conductive layer 9 and terminal 6, a distance between conductive layer 9 and terminal 6 is set broader than a distance between conductive layer 8 and terminal 6.

### <Process 4>

Plural units 61 obtained in Process 3 is overlaid and stacked such that conductive layers 8 and 9 face each other across substrate 2.

In Fig. 4, capacitor 1004 is obtained by stacking four units 61. However, the number of units is determined with consideration typically to a required capacitance and a required size of capacitor 1004.

After Process 4, insulation coating layer 11 is disposed on the uppermost layer. This structure protects conductive layer 8 and conductive layer 9 from external environment.

Then, terminal 5 is thermally sprayed on side surface 4001C of capacitor element 4001. Similarly, terminal 6 is thermally sprayed on side surface 4001D of capacitor 4001. Plural conductive layers 8 disposed inside capacitor element 4001 are connected to terminal 5 at side surface 4001C in direct current. Plural conductive layers 9 disposed inside capacitor element 4001 are connected to terminal 6 at side surface 4001D in direct current.

Conductive layers 8 and 9 face each other across dielectric layer 4 that is a single nanosheet with a thickness ranging from 0.3 nm to 50 nm and a high relative dielectric constant, hence providing capacitor 1004 with a large capacitance.

Capacitor 1004 shown in Fig. 4 is formed by stacking four units 61. However, the exemplary embodiment is not limited to this configuration. Single unit 61 may be overlaid by rolling unit 61. Terminal 5 may be thermally sprayed on one end of rolled unit 61, and terminal 6 may be thermally sprayed on the other end of rolled unit 61.

Capacitor 1004 according to Embodiment 4 shown in Fig. 4 can be obtained just by stacking units 61 with the same shape, hence increasing productivity.

Substrate 2 is made of an organic film, such as resin film, and its thickness is larger than that of dielectric layer 4. This allows conductive layer 8 and dielectric layer 4 to be formed on upper surface 2A of substrate 2.

Substrate 2 shown in Fig. 4 is made of organic compound, and dielectric layer 4 shown in Fig. 4 is made of inorganic compound.

The cross-sectional view of capacitor 1004 shown in Fig. 4 illustrates capacitor 1004 pressed in a vertical direction shown in Fig. 4 after the above processes, to bond each layer. In Fig. 4, dielectric layer 4 is smooth. However, the exemplary embodiment is not limited to the smooth surface. Dielectric layer 4 may have a rough surface.

As described above, capacitor 1004 includes plural units 61. Each unit 61 includes substrate 2 made of an organic film, conductive layer 8 formed on one surface 2A of substrate 2, dielectric layer 4 formed on surface 8A of conductive layer 8, and conductive layer 9 formed on surface 4A of dielectric layer 4. Conductive layer 8 has connecting portion 8T reaching one end of substrate 2. Conductive layer 9 has connecting portion 9T reaching one end of substrate 2. Dielectric layer 4 is made of a metal oxide with a thickness of about several atoms or a laminated body of this metal oxide. Connecting portions 8T and 9T are positioned in opposite directions to each other. Plural units 61 are overlaid in the same direction, and then, rolled or stacked.

As described above, substrate 2 made of an organic film is prepared. Conductive layer 8 is formed on one surface of substrate 2. Conductive layer 8 has connecting portion 8T reaching one end of substrate 2. Dielectric layer 4 is formed on a surface of conductive layer 8. Conductive layer 9 is formed on a surface of dielectric layer 4. Conductive layer 9 has connecting portion 9T reaching one end of substrate 9. Plural units 61 are manufactured in this way. Connecting portions 8T and 9T are disposed in opposite directions to each other. Plural units 61 are overlaid in the same directions, and then, stacked or rolled, thereby providing capacitor 1004.

### EXEMPLARY EMBODIMENT 5

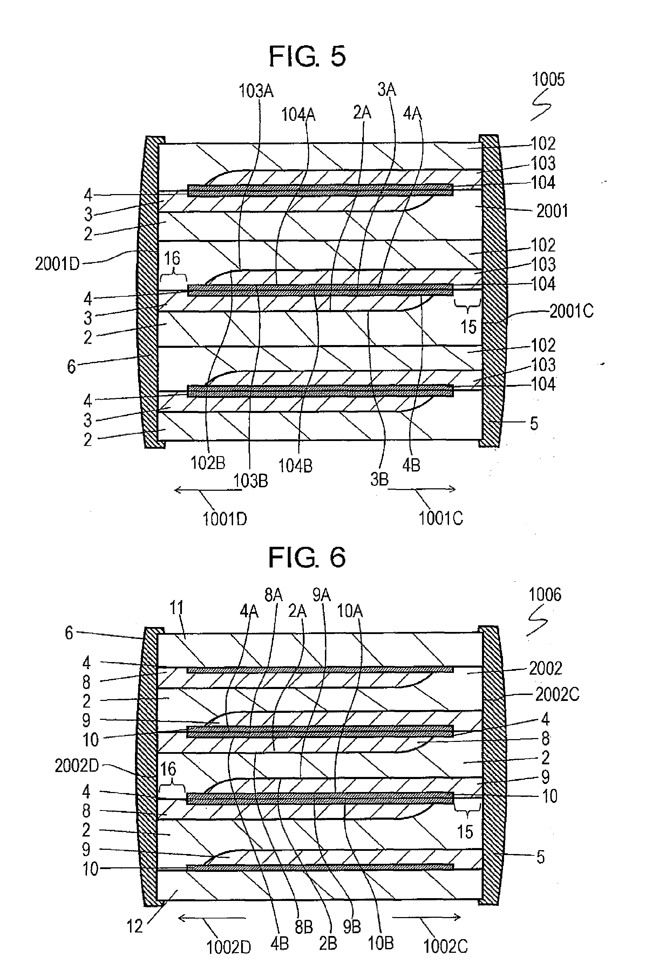

Fig. 5 is a cross-sectional view of capacitor 1005 according to Exemplary Embodiment 5. In Fig. 5, components identical to those of capacitor 1001 according to Embodiment 1 shown in Fig. 1A are denoted by the same reference numerals.

In capacitor 1005 according to Embodiment 5 shown in Fig. 5, lower surface 3B of conductive layer 3 has non-dielectric-layer portion 15 at an end of lower surface 3B in direction 1001C. Upper surface 103A of conductive layer 103 has non-dielectric-layer portion 16 at an end of upper surface 103A in direction 1001D. Dielectric layer 4 is formed on upper surface 3A of conductive layer 3 except non-dielectric-layer portion 16. Dielectric layer 104 is formed on lower surface 103B of conductive layer 103 except non-dielectric-layer portion 15.

As shown in Fig. 5, dielectric layers 4 and 104 are not formed on non-dielectric-layer portion 15. This arrangement eliminates a defective capacitor in which dielectric layer 104 reaches the side surface of conductive layer 3 and disconnects terminal 6 from conductive layer 3 in direct current. This arrangement eliminates a defective capacitor in which dielectric layer 104 disconnects conductive layer 103 from terminal 5 in direct current.

Similarly, dielectric layers 4 and 104 are not formed on non-dielectric-layer portion 16. This arrangement eliminates a defective capacitor in which dielectric layers 4 and 104 reach the side surface of conductive layer 103 and disconnects terminal 5 from conductive layer 103 in direct current. This also suppresses occurrence of a defective capacitor in which dielectric layers 4 and 104 disconnect conductive layer 3 from terminal 6.

### EXEMPLARY EMBODIMENT 6

Fig. 6 is a cross-sectional view of capacitor 1006 according to Exemplary Embodiment 6. In Fig. 6, components identical to those of capacitor 1002 according to Embodiment 2 shown in Fig. 2 are denoted by the same reference numerals.

In capacitor 1006 according to Embodiment 6 shown in Fig. 6, lower surface 9B of conductive layer 9 has non-dielectric-layer portion 15 at an end of lower surface 9B in direction 1002C. Upper surface 9A of conductive layer 9 has non-dielectric-layer portion 16 at an end of upper surface 9A in direction 1002D. Dielectric layers 4 and 10 are formed on upper surface 8A of conductive layer 8 except non-dielectric-layer portion 15. Dielectric layers 4 and 10 are formed on upper surface 8A of conductive layer 8 except non-dielectric-layer portion 16.

As shown in Fig. 6, dielectric layer 4 is not formed on non-dielectric-layer portion 15. This arrangement eliminates a defective capacitor in which dielectric layer 4 reaches a side surface of conductive layer 8 and disconnects terminal 6 from conductive layer 8 in direct current. This also suppresses occurrence of a defective capacitor in which dielectric layer 4 disconnects conductive layer 9 from terminal 5 in direct current.

Similarly, dielectric layer 10 is not formed on non-dielectric-layer portion 16. This arrangement eliminates a defective capacitor in which dielectric layer 10 reaches the side surface at one end of conductive layer 9 and disconnects terminal 5 from conductive layer 9 I direct current. This arrangement also suppresses occurrence of a defective capacitor in which dielectric layer 10 disconnects conductive layer 8 from terminal 6 in direct current.

### EXEMPLARY EMBODIMENT 7

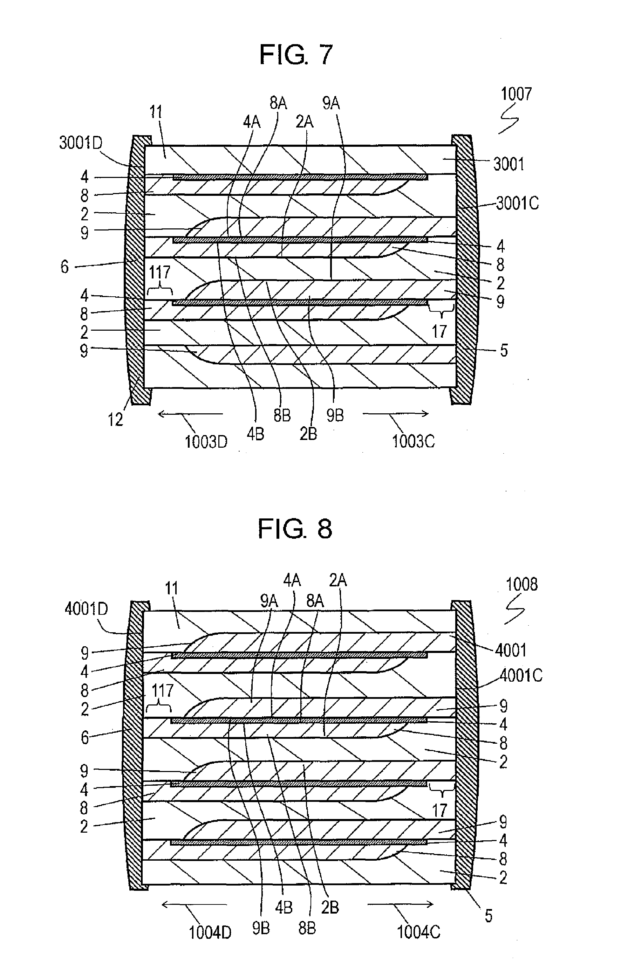

Fig. 7 is a cross-sectional view of capacitor 1007 according to Exemplary Embodiment 7. In Fig. 7, components identical to those of capacitor 1003 according to Embodiment 3 shown in Fig. 3 are denoted by the same reference numerals.

In capacitor 1007 according to Embodiment 7 shown in Fig. 7, upper surface 8A of conductive layer 8 has non-dielectric-layer portion 117 at an end of upper surface 8A in direction 1003D. Lower surface 9B of conductive layer 9 has non-dielectric-layer portion 17 at an end of lower surface 9B in direction 1003C. Dielectric layer 4 is formed on upper surface 8A of conductive layer 8 except non-dielectric-layer portion 117 and formed on lower surface 9B of conductive layer 9 except non-dielectric-layer portion 17.

As shown in Fig. 7, dielectric layer 4 is not formed on non-dielectric-layer portions 17 and 117. This arrangement eliminates a defective capacitor in which dielectric layer 4 reaches the side surface of conductive layer 8 and disconnects terminal 6 from conductive layer 8 in direct current. This arrangement also suppresses occurrence of a defective capacitor in which dielectric layer 4 disconnects conductive layer 9 from terminal 5 in direct current.

### EXEMPLARY EMBODIMENT 8

Fig. 8 is a cross-sectional view of capacitor 1008 according to Exemplary Embodiment 8. In Fig. 8, components identical to those of capacitor 1004 according to Embodiment 5 shown in Fig. 4 are denoted by the same reference numerals.

In capacitor 1008 according to Embodiment 8 in Fig. 8, upper surface 8A of conductive layer 8 has non-dielectric-layer portion 117 at an end of upper surface 8A in direction 1004D. Lower surface 9B of conductive layer 9 has non-dielectric-layer portion 17 at an end of lower surface 9B in direction 1004C. Dielectric layer 4 is formed on upper surface 8A of conductive layer 9 except non-dielectric-layer portion 117, and lower surface 9B of conductive layer 8 except non-dielectric-layer portion 17.

As shown in Fig. 8, dielectric layer 4 is not formed on non-dielectric-layer portion 17. This arrangement eliminates a defective capacitor in which dielectric layer 4 reaches the side surface of conductive layer 8 and disconnects terminal 6 from conductive layer 8 in direct current. This arrangement also suppresses occurrence of a defective capacitor in which dielectric layer 4 disconnects conductive layer 9 from terminal 5.

Figs. 1A to 8 conceptually illustrate capacitors 1001 to 1008. They are not accurate cross-sectional views of actual capacitors. In addition, dielectric layers 4, 104, 10, and 110 may be made of a laminated body of plural nanosheets or a single-layer nanosheet.

### EXEMPLARY EMBODIMENT 9

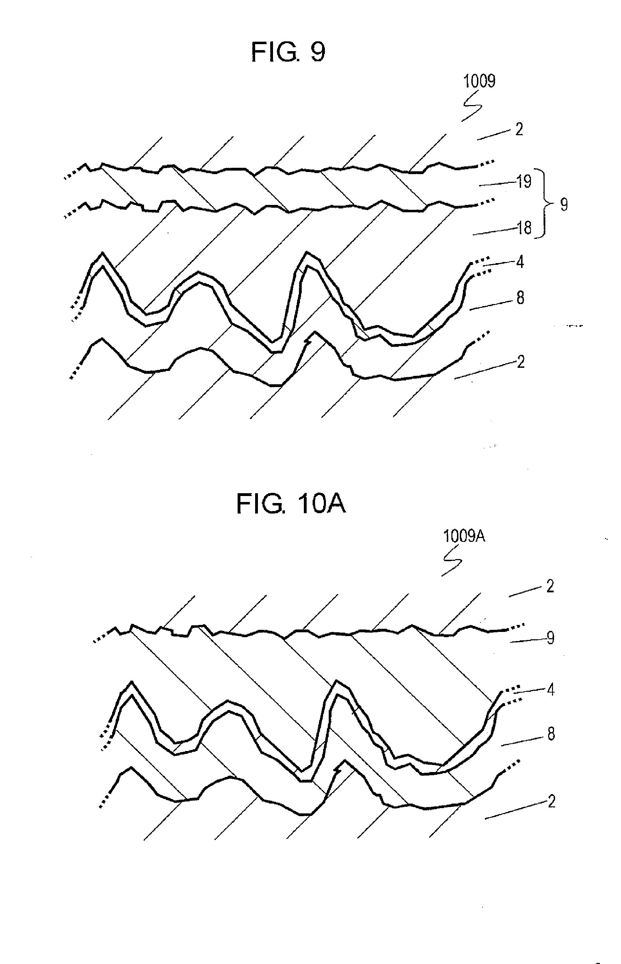

Fig. 9 is an enlarged cross-sectional view of capacitor 1009 according to Exemplary Embodiment 9. Fig. 9 shows boundary surfaces of substrate 2, conductive layer 8, dielectric layer 4, and conductive layer 9.

Upper surface 2A of substrate 2 having conductive layer 8 situated thereon has rough portions. Conductive layer 8 is formed on the surface with the rough portions by sputtering or deposition, thereby increasing the adhesion strength between substrate 2 and conductive layer 8.

In order to form the rough portions on upper surface 2A of substrate 2, the surface of substrate 2 is roughened by dry etching or wet etching.

Rough portions are also formed on upper surface 8A of conductive layer 8 having dielectric layer 4 situated thereon. This increases the surface area of conductive layer 8, increasing a capacitance of the capacitor.

The rough portions the surface of conductive layer 8 may be formed based on rough portions formed on a surface of substrate 2. Alternatively, the rough portions may be formed only by adjusting process conditions (sputtering or deposition) for forming conductive layer 8. Alternatively, the rough portions may be formed on the surface of conductive layer 8 by combining these two methods.

Dielectric layer 4 made of a nanosheet of titanium oxide or niobium oxide is formed such that dielectric layer 4 covers the surfaces of the rough portions on conductive layer 8 with a substantially constant thickness.

In Fig. 9, conductive layer 9 includes conductive polymer layer 18 provided on upper surface 4A of dielectric layer 4 and base metal layer provided on upper surface 18A of conductive polymer layer 18. Conductive polymer layer 18 is made of conductive resin, and has a smaller hardness to be more flexible than metal.

Accordingly, conductive polymer layer 18 can enter into dimples of dielectric layer 4 while minimizing deformation of the rough portions formed on the surface of conductive layer 8. This prevents a space from being formed between electrodes (between conductive layer 8 and conductive layer 9) of the capacitor, and increases the opposing area between electrodes.

In order to form conductive polymer layer 18, dispersion liquid containing particles of conductive polymer and dispersant is applied onto dielectric layer 4, and then, the dispersant is removed at least partially or/and cured. Alternatively, conductive polymer layer 18 may be formed by providing monomer on dielectric layer 4 and then polymerizing the monomer with oxidant or anodization.

In Fig. 9, a boundary surface between conductive polymer layer 18 and base metal layer 19 is not smooth, but moderately roughened. This increases adhesion strength of conductive polymer layer 18 and base metal layer 19, and also increases a contact area of these layers to reduce a resistivity accordingly. In order to roughen the boundary surface between conductive polymer layer 18 and base metal layer 19, the upper surface of conductive polymer layer 18 may be etched. The etching agent used for the etching may be potassium permanganate. Base metal layer 19 is formed by sputtering or deposition.

In Fig. 9, base metal layer 19 is provided on the upper surface of conductive polymer layer 18 so as to increase effective conductivity of conductive layer 9. In general, a conductivity of conductive polymer is several hundredths of a conductivity of metal. Base metal layer 19 can reduce effective conductivity of conductive layer 9.

More specifically, a process of forming conductive layer 9 in Process 3 according to Embodiment 4 may be replaced with a process of forming conductive layer 9 according to Embodiment 9.

In Fig. 9, conductive layer 9 includes base metal layer 19. However, the present invention is not limited to this configuration. Conductive layer 9 may include only conductive polymer layer 18 without base metal layer 19, hence simplifying its manufacturing process.

Fig. 10A is an enlarged cross-sectional view of another capacitor 1009A according to Embodiment 9. In Fig. 10A, components identical to those of capacitor 1009 according to Embodiment 9 shown in Fig. 9 are denoted by the same reference numerals. Conductive layer 9 shown in Fig. 10A does not include base metal layer 19, and conductive layer 9 is softer than conductive layer 8. Since conductive layer 9 is softer than conductive layer 8, conductive layer 8 does not basically change its shape by pressing in a vertical direction in Fig. 10A. On the other hand, only conductive layer 9 basically changes its shape, and enters into the dimples on dielectric layer 4. This prevents a space from being formed between electrodes (between conductive layer 8 and conductive layer 9) of the capacitor, and increases an opposing area between the electrodes.

In Fig. 10A, conductive layer 8 and conductive layer 9 may be made of different metals, or the same metal. If the same metal is used, process conditions for forming conductive layer 8 and conductive layer 9 are different so as to cause conductive layer 9 to be softer than conductive layer 8.

In capacitor 1001 according to Embodiment 1, hardnesses of conductive layers 3 and 103 in a pair of units 150 obtained in Process 2 are basically the same. However, as described above, the hardnesses of conductive layers 3 and 103 of the pair of units 50 and 150 may be different from each other. The rough portions are provided on the surface of dielectric layer and also on the surface of conductive layer 3. This structure increases the surface area of conductive layers 8 and 9, accordingly providing the capacitor with a large capacitance. In addition, this structure increases the adhesion strength of units 50 and 160.

Also in the capacitor according to Embodiment 2, hardnesses of conductive layers 8 and hardness of conductive layer 9 may be different, and the rough portions may be provided on the surface of at least one of dielectric layers 4 and 10. This structure increases the surface area of conductive layers 8 and 9, thereby providing the capacitor with a large capacitance and increasing the adhesion strength of the layers.

Also in the capacitor according to Embodiment 3, hardnesses of conductive layer 8 and conductive layer 9 may be different, and the rough portions may be provided on the surface of at least one of dielectric layer 4 or conductive layer 9. This structure increases the surface area of conductive layers 8 and 9, thereby providing the capacitor with a large capacitance and increasing the adhesion strength of the layers.

Also in the capacitor according to Embodiment 4, hardnesses of conductive layers 8 and conductive layer 9 may be different, and the rough portions may be provided on the surface of dielectric layer 4. This structure increases the surface area of conductive layers 8 and 9, thereby providing the capacitor with a large capacitance and increasing the adhesion strength of the layers.

A single body of an oxide nanosheet used for forming the nanosheet has a thickness only equivalent to several atoms. The thickness ranges roughly from 0.3 nm to 2 nm, and its length and width are range from about 10 nm to 1 mm. For example, an adhesion support layer (specifically, a layer made of cathion) provided on the surface of conductive layer 8 is used as adhesion layer, and numerous single bodies of oxide nanosheet are spread over on the surface of conductive layer to form dielectric layer 4. In Fig. 9, an average distance between salients of the rough portions formed on the surface of conductive layer 8 may be larger than the length and width of aforementioned single body of oxide nanosheet. This causes the single bodies of oxide nanosheet also into the dimples, thereby preventing small holes from forming in dielectric layer 4.

In Fig. 9, numerous rough portions are formed only on upper surface 2A of substrate 2 having conductive layer 8 formed thereon. However, numerous rough portions may also be formed on lower surface 2B of substrate 2.

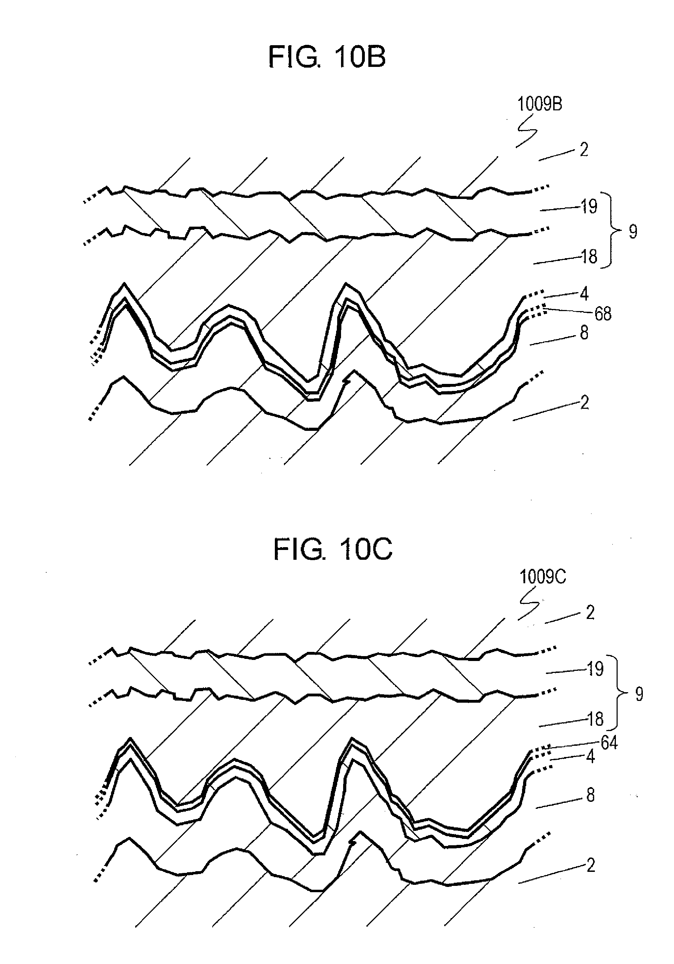

Fig. 10B is an enlarged cross-sectional view of still another capacitor 1009B according to Embodiment 9. In Fig. 10B, components identical to those of capacitor 1009 according to Embodiment 9 shown in Fig. 9 are denoted by the same reference numerals. In capacitor 1009B shown in Fig. 10B, insulation coating layer 68 that entirely covers upper surface 8A is provided on upper surface 8A of conductive layer 8. This prevents short-circuiting of conductive layer 8 and conductive layer 9 even if a small hole is produced in dielectric layer 4 by the nanosheet.

Fig. 10C is an enlarged cross-sectional view of further capacitor 1009C according to Embodiment 9. In Fig. 10C, components identical to those of capacitor 1009 according to Embodiment 9 are denoted by the same reference numerals. In capacitor 1009C shown in Fig. 10C, insulation coating layer 63 is provided to entirely cover upper surface 4A of dielectric layer 4 made of the nanosheet. If a small hole is produced in dielectric layer 4, insulation coating layer 64 enters into the small hole in the nanosheet, and as a result, a part of the surface of conductive layer 8 is covered with the insulation coating agent. This prevents short-circuiting of conductive layer 8 and conductive layer 9. Also in this case, if the surface of the insulation coating layer applied to the upper surface of conductive layer 8 is smoothed, the insulation coating layer mostly enters small holes and dimples in conductive layer 8, and thus, only a part of the surface of dielectric layer 4 is covered with the insulation coating layer. This avoids occurrence of space between conductive layer 8 and conductive layer 9, and prevents reduction of the capacitance of the capacitor.

Insulation coating layers 64 and 68 are made of an insulating material that is paste or liquid before applied, and can be cured after application. This insulating material is, for example, polypropylene or polyphenylene sulfide. However, the insulating material is not limited to these materials.

### EXEMPLARY EMBODIMENT 10

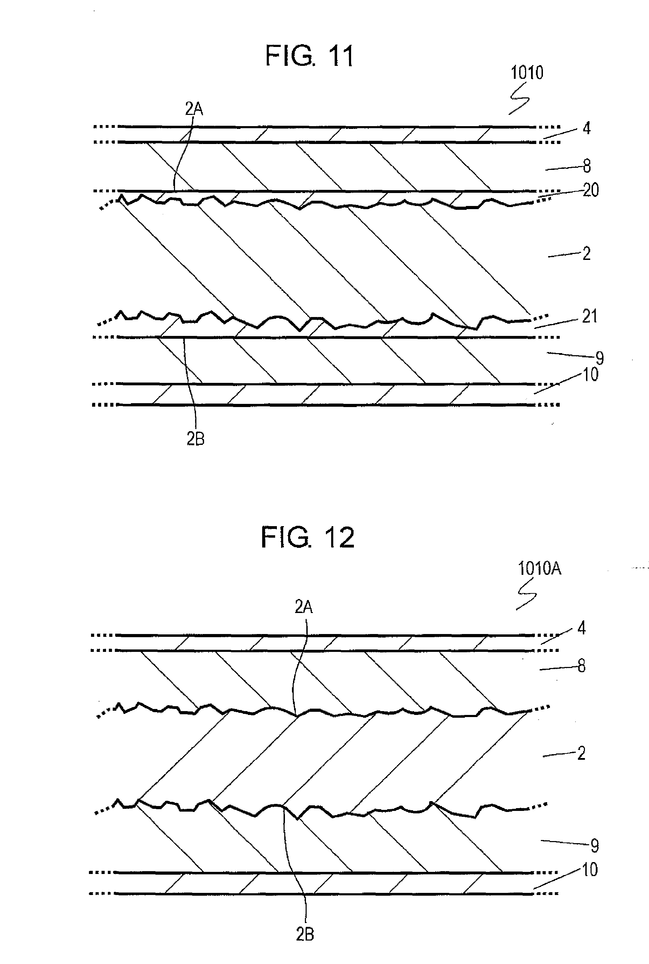

Fig. 11 is an enlarged cross-sectional view of capacitor 1010 according to Embodiment 10. Fig. 11 illustrates boundary surfaces of substrate 2, conductive layer 8, dielectric layer 4, and conductive layer 9 of capacitors 1001 to 1008 according to Embodiments 1 to 8.

The rough portions are generated on upper surface 2A and lower surface 2B of substrate 2 in its manufacturing process. To smooth the surfaces, insulation coating layer 20 is formed on upper surface 2A of substrate 2, and insulation coating layer 21 is formed on lower surface 2B of substrate 2.

Conductive layer 8 is formed on the upper surface of smoothened insulation coating layer 20, and conductive layer 9 is formed on the lower surface of smoothened insulation coating layer 21 by sputtering or deposition. Conductive layer 8 or conductive layer 9 is formed on the smooth surface of insulation coating layer 20 or insulation coating layer 21. Therefore, surfaces of conductive layer 8 and conductive layer 9 are substantially smooth.

Still more, dielectric layer 4 is formed on the surface of conductive layer 8, and dielectric layer 10 is formed on the surface of conductive layer 9. Since dielectric layer 4 and dielectric layer 10 are formed on the substantially-smooth surfaces of conductive layer 8 and conductive layer 9, surfaces of dielectric layer 4 and dielectric layer 10 also become substantially smooth.

When the structures shown in Fig. 11 shown in Fig. 11 are stacked to provide a capacitor, surfaces that are mutually bonded to are substantially smooth, and prevent spaces from being produced between conductive layer 8 and conductive layer 9, hence preventing the capacitance of the capacitor from being reduced.

Fig. 12 is an enlarged cross-sectional view of another capacitor 1010A according to Embodiment 10. In Fig. 12, components identical to those of capacitor 1010 shown in Fig. 11 are denoted by the same reference numerals. Capacitor 1010A shown in Fig. 12 does not include insulation coating layers 20 and 21, and conductive layers 8 and 9 are made of conductive polymer. This smoothes the rough portions on the surface of substrate 2, and thus simplifies the manufacturing process. In addition, similarly to capacitor 1009 shown in Fig. 9, each of conductive layers 8 and 9 is made of the conductive polymer layer and the base metal layer, thereby increasing a conductivity of conductive layers 8 and 9.

In the above embodiments, terms indicating directions, such as "upper surface" and "lower surface" indicate relative directions depending only on relative positional relationship of components of the capacitor, such as the dielectric layer and conductive layer, and do not indicate absolute directions, such as a vertical direction.

### INDUSTRIAL APPLICABILITY

A capacitor according to the present invention has a small size and a large capacitance, and is applicable to small electronic devices, such as cellular phones for mobile communications and notebook personal computers.

### REFERENCE MARKS IN THE DRAWINGS

- 2: Substrate
- 3: Conductive Layer (First Conductive Layer)
- 4: Dielectric Layer (First Dielectric Layer)
- 7: Non-Conductive-Layer Portion
- 8: Conductive Layer (First Conductive Layer)
- 9: Conductive Layer (Second Conductive Layer)
- 10: Dielectric Layer (Second Dielectric Layer)
- 13: Non-Conductive-Layer Portion
- 14: Non-Conductive-Layer Portion
- 15: Non-Dielectric-Layer Portion
- 16: Non-Dielectric-Layer Portion
- 17: Non-Dielectric-Layer Portion
- 18: Conductive Polymer Layer
- 19: Base Metal Layer
- 20: Insulation Coating Layer
- 21: Insulation Coating Layer
- 50: Unit (First Unit, Second Unit)
- 51: Unit (First Unit, Second Unit)
- 60: Unit (First Unit, Second Unit)
- 61: Unit (First Unit, Second Unit)
- 103: Conductive Layer (Second Conductive Layer)
- 104: Dielectric Layer (Second Dielectric Layer)

## Claims

1. A capacitor comprising:
a substrate made of an organic film;
a first conductive layer provided on an upper surface of the substrate;
a first dielectric layer provided on an upper surface of the first conductive layer;
a second dielectric layer provided on an upper surface of the first dielectric layer; and
a second conductive layer provided on an upper surface of the second dielectric layer,
wherein the first dielectric layer is made of a plurality of metal oxide chips spread over on the upper surface of the first conductive layer, and
wherein the second dielectric layer is made of a plurality of metal oxide chips spread over on a lower surface of the second conductive layer.

2. The capacitor according to claim 1,
wherein the upper surface of the substrate has a first non-conductive-layer portion at an end of the upper surface of the substrate in a first direction,
wherein the first conductive layer is provided on the upper surface of the substrate except the first non-conductive-layer portion,
wherein the upper surface of the second dielectric layer has a second non-conductive-layer portion at an end of the upper surface of the second dielectric layer in a second direction opposite to the first direction,
wherein the second conductive layer is provided on the upper surface of the second dielectric layer except the second non-conductive-layer portion,
wherein the upper surface of the first conductive layer has a first non-dielectric-layer portion at an end of the upper surface of the first conductive layer in the second direction, and
wherein the first dielectric layer is provided on the upper surface of the first conductive layer except the first non-dielectric-layer portion.

3. The capacitor according to claim 2, wherein the first dielectric layer is provided on the upper surface of the substrate at an end of the upper surface of the substrate in the first direction except the second non-dielectric-layer portion.

4. A capacitor comprising:
a substrate;
a first conductive layer provided on an upper surface of the substrate;
a first dielectric layer provided on an upper surface of the first conductive layer;
a second conductive layer provided on an upper surface of the first dielectric layer; and
a second dielectric layer provided on an upper surface of the second conductive layer,
wherein the first dielectric layer is made of a plurality of metal oxide chips spread over on the upper surface of the first conductive layer; and
wherein the second dielectric layer is made of a plurality of metal oxide chips spread over on the upper surface of the second conductive layer.

5. The capacitor according to claim 4,
wherein the upper surface of the first dielectric layer has a first non-conductive-layer portion at an end of the upper surface of the first dielectric layer in a first direction,
wherein the upper surface of the second dielectric layer has a second non-conductive-layer portion at an end of the upper surface of the second dielectric layer in a second direction opposite to the first direction,
wherein the first conductive layer is provided on the upper surface of the first dielectric layer except the first non-conductive-layer portion,
wherein the second conductive layer is provided on the upper surface of the second dielectric layer except the second non-conductive-layer portion,
wherein the upper surface of the first conductive layer has a non-dielectric-layer portion at an end of the upper surface of the first conductive layer in one of the first direction and the second direction, and
wherein the second dielectric layer is provided on the upper surface of the first conductive layer except the non-dielectric-layer portion.

6. The capacitor according to claim 1 or 4, wherein a thickness of the first dielectric layer and a thickness of the second dielectric layer are not less than 0.3 nm and not greater than 50 nm.

7. The capacitor according to claim 1 or 4, wherein relative dielectric constants of the first dielectric layer and the second dielectric layer are not lower than 30.

8. The capacitor according to claim 1 or 4, wherein at least one of the first conductive layer and the second conductive layer is partly or entirely made of conductive polymer.

9. The capacitor according to claim 1 or 4, wherein a surface of at least one of the first conductive layer and the second conductive layer has a rough portion.

10. The capacitor according to claim 9, wherein a hardness of the first conductive layer is different from a hardness of the second conductive layer.

11. The capacitor according to claim 1 or 4, wherein a surface of the substrate has a rough portion.

12. The capacitor according to claim 11, wherein a hardness of the first conductive layer is different from a hardness of the second conductive layer.

13. The capacitor according to claim 1 or 4, further comprising an insulation coating layer that at least partially covers at least one of the upper surface and a lower surface of the substrate.

14. A method of manufacturing a capacitor, comprising:
providing a first conductive layer on an upper surface of a first substrate made of an organic film;
preparing a first unit by providing a first dielectric layer on an upper surface of the first conductive layer after said providing of the first conductive layer;
providing a second conductive layer on a lower surface of a second substrate made of an organic film;
preparing a second unit by providing a second dielectric layer on a lower surface of the second conductive layer after said providing of the second conductive layer; and
overlaying the first unit and the second unit such that the first conductive layer and the second conductive layer face each other across the first dielectric layer and the second dielectric layer,
wherein the first dielectric layer is made of a plurality of metal oxide chips spread over on the upper surface of the first conductive layer; and
wherein the second dielectric layer is made of a plurality of metal oxide chips spread over on the lower surface of the second conductive layer.

15. A method of manufacturing a capacitor, comprising:
preparing a first unit, said preparing of the first unit comprising
providing a first conductive layer on an upper surface of a first substrate made of an organic film,
providing a first dielectric layer on an upper surface of the first conductive layer after said providing of the first conductive layer,
providing a second conductive layer on a lower surface of the first substrate, and
providing a second dielectric layer on a lower surface of the second conductive layer after said providing of the second conductive layer;
preparing a second unit, said preparing of the second unit comprising
providing a third conductive layer on an upper surface of a second substrate made of an organic film,
providing a third dielectric layer on an upper surface of the third conductive layer after said providing of the third conductive layer,
providing a fourth conductive layer on a lower surface of the second substrate, and
providing a fourth dielectric layer on a lower surface of the fourth conductive layer after said providing of the fourth conductive layer; and
overlaying the first unit and the second unit such that the second conductive layer and the fourth conductive layer face each other across the second dielectric layer and the fourth dielectric layer,
wherein the first dielectric layer is made of a plurality of metal oxide chips spread over on the upper surface of the first conductive layer;
wherein the second dielectric layer is made of a plurality of metal oxide chips spread over on the lower surface of the second conductive layer;
wherein the third dielectric layer is made of a plurality of metal oxide chips spread over on the upper surface of the third conductive layer; and
wherein the fourth dielectric layer is made of a plurality of metal oxide chips spread over on the lower surface of the fourth conductive layer.

16. A method of manufacturing a capacitor comprising:
preparing a first unit, said preparing of the first unit comprising
providing a first conductive layer on an upper surface of a first substrate made of an organic film,
providing a first dielectric layer on an upper surface of the first conductive layer after said providing of the first conductive layer, and
providing a second conductive layer on a lower surface of the first substrate;
preparing a second unit, said preparing of the second unit comprising
providing a third conductive layer on an upper surface of a second substrate made of an organic film,
providing a second dielectric layer on an upper surface of the third conductive layer after said providing of the third conductive layer, and
providing a fourth conductive layer on a lower surface of the second substrate; and
overlaying the first unit and the second unit such that the first conductive layer faces the fourth conductive layer across the first dielectric layer,
wherein the first dielectric layer is made of a plurality of metal oxide chips spread over on the upper surface of the first conductive layer; and
wherein the second dielectric layer is made of a plurality of metal oxide chips spread over on the upper surface of the third conductive layer.

17. A method of manufacturing a capacitor, comprising:
preparing a first unit, said preparing of the first unit comprising
disposing a first conductive layer on an upper surface of a first substrate made of an organic film,
providing a first dielectric layer on an upper surface of the first conductive layer, and
providing a second conductive layer on an upper surface of the first dielectric layer after said providing of the first dielectric layer;
preparing a second unit, said preparing of the second unit comprising
disposing a third conductive layer on an upper surface of a second substrate made of an organic film,
providing a second dielectric layer on an upper surface of the third conductive layer, and
providing a fourth conductive layer on an upper surface of the second dielectric layer after said providing of the second dielectric layer; and
overlaying the first unit and the second unit such that the upper surface of the second conductive layer faces the third conductive layer across the second substrate,
wherein the first dielectric layer is made of a plurality of metal oxide chips spread over on the upper surface of the first conductive layer; and
wherein the second dielectric layer is made of a plurality of metal oxide chips spread over on the upper surface of the third conductive layer.

18. The method according to any one of claims 15 to 17, wherein at least one of the first conductive layer, the second conductive layer, the third conductive layer, and the fourth conductive layer contains conductive polymer.

19. The method according to any one of claims 15 to 17, wherein a surface of at least one of the first conductive layer, the second conductive layer, the third conductive layer, and the fourth conductive layer has a rough portion.

20. The method according to claim 19, wherein a hardness of the first conductive layer is different from a hardness of the second conductive layer.

21. The method according to any one of claims 15 to 17, wherein a surface of the first substrate has a rough portion.

22. The method according to claim 21, wherein a hardness of the first conductive layer is different from a hardness of the second conductive layer.

23. The method according to any one of claims 14 to 17, wherein the first substrate includes an insulation coating layer provided at least partially on a surface of at least one of the upper surface and a lower surface of the first dielectric layer.

24. The method according to any one of claims 14 to 17, wherein an insulation coating layer covers at least a part of a surface of at least one of the first conductive layer and the second conductive layer.

25. The method according to any one of claims 14 to 17, wherein an insulation coating layer covers at least a part of a surface of the first dielectric layer.
